# EUROPEAN PATENT SPECIFICATION

(11) **EP 4 030 898 B1**
(45) Date of publication and mention of the grant of the patent: **21.01.2026**
(21) Application number: 20771632.5
(22) Date of filing: 09.09.2020
(51) Int. Cl.: A01M 7/00

(54) **BOOM FOR AN AGRICULTUAL CROP SPRAYER AND METHOD OF MANUFACTURE**
AUSLEGER FÜR EIN LANDWIRTSCHAFTLICHES PFLANZENSPRÜHGERÄT UND HERSTELLUNGSVERFAHREN
RAMPE POUR PULVÉRISATEUR AGRICOLE ET SON PROCÉDÉ DE FABRICATION

(30) Priority: 18.09.2019 GB 201913473
(43) Date of publication of application: 27.07.2022
(73) Proprietor: Agco do Brasil Solucoes Agricolas LTDA, Sao Paulo, 14030-680 (BR)
(72) Inventor: SOLIMAN, Marcos Pedrolo, 14030-680 Sao Paulo (BR)
(74) Representative: AGCO Intellectual Property Department
(86) International application number: PCT/IB2020/058359
(87) International publication number: WO 2021/053461

(56) References cited:
- EP-A1- 3 111 760
- GB-A- 2 200 668
- US-A- 1 645 060
- US-A1- 2012 275 847
- US-A1- 2017 216 871

## Description

### FIELD OF INVENTION

The invention relates to the construction of booms for agricultural sprayers used for the application of plant protection products to crop fields.

### BACKGROUND

Agricultural sprayers are used by farmers and contractors to apply pesticides and other nutrient-containing solutions to crop fields. Sprayers can be mounted to, or towed by, a tractor or other suitable vehicle or may be self-propelled with an integrated means of propulsion and a driver's cab. The sprayer machine typically includes a storage tank for the liquid to be applied, the tank being filled as required by the operator.

The liquid is applied to the field by a number of liquid application devices, typically spray nozzles, which are mounted in a spaced relationship along the length of a boom which, itself, is mounted to the sprayer vehicle. The nozzles are each connected to the storage tank by liquid delivery means comprising various pipes, valves, pumps and other plumbing. The liquid is atomised by the nozzles and applied to the crop in a jet of mist for example.

The length of the boom determines the operating width of the sprayer. A sprayer will typically have mounted thereto two identical booms that extend transversely to either side of the sprayer. Driven by economies of scale, there is a growing demand for sprayer manufacturers to produce machines with longer spray booms. All but the smallest of models comprise a folding multi-section boom which folds for transport. Increasing the boom length significantly increases the risk of structural failure due to the increased stress placed upon the hinges and joints caused by natural vibrations and oscillations which pass from the spray vehicle along the boom. Moreover, to avoid inaccurate application of chemicals, the oscillations should be minimised.

The stiffness-to-weight ratio of the boom needs to be sufficient to resist the bending forces subjected to the boom during motion. With common materials such as aluminium and steel this has proven unachievable for boom lengths greater than 36m.

Lighter, stronger, materials such as composites including carbon fibre may achieve the desired stiffness-to-weight ratio but carry significant additional cost which makes their use commercially unviable. For example, one problem with employing carbon fibre for booms is the high cost associated with manufacturing complex structures. Furthermore, repairing damaged booms formed from carbon fibre commonly requires complete replacement which is expensive.

EP 3 111 760 A1 to CarboFibretec GmbH discloses a multi-section boom for an agricultural crop sprayer having three boom sections, each of which defines a generally triangular structure. Two of the boom sections form inner and middle sections of the boom. Each have longitudinal beams interconnected by multiple diagonal braces to from a truss or framework. In an embodiment, the longitudinal beams are made of carbon fibre reinforced plastic and the diagonal braces are made of aluminium. The third section is an outer section and is made completely from carbon fibre reinforced plastic in one piece or from three surface components connected together.

Yet there remains a desire to exploit the favourable properties of composite materials but whilst minimising the associated cost increase. It is therefore one object of the invention to provide a boom having a construction which accommodates lighter and/or stronger materials without significantly increasing the cost of manufacturing or maintaining the overall boom.

### SUMMARY OF THE INVENTION

In accordance with one aspect of the invention there is provided a boom for an agricultural crop sprayer having a tubular structure with a rounded triangular section that extends from a first boom end to a second boom end, the tubular structure comprising three flat plates fastened together by three curved connecting members, wherein the flat plates are formed from a first material and the curved members are formed from a second material different to the first material.

In accordance with another aspect of the invention there is provided a method of manufacturing a crop sprayer boom comprising fastening three plates together with three curved connecting members to form a tubular structure with a rounded triangular section that extends from a first boom end to a second boom end, wherein the plates are formed from a first material and the curved members are formed from a second material different to the first material.

The invention provides a simple yet strong construction that can exploit the advantages delivered by different materials having different properties. The tubular structure with rounded triangular section that extends along the length of the boom provides functional strength and simplicity in assembly. The rounded corners of the triangular section are provided by the connecting members and deliver greater strength and rigidity compared to straight corners.

Fabricated using two different materials the boom of the invention can exploit both the strength of composite materials in places where it delivers optimum benefit and the low cost of more conventional materials.

It should be understood that the term 'boom' is used herein in relation to an assembly that can form a single boom section of a multi-section boom arrangement for attachment to an agricultural sprayer.

The plates are preferably substantially flat and elongate. It should be understood that the plates, although substantially flat, may be contoured to an extent to increase strength and reduce the risk of buckling.

In a preferred embodiment the plates are formed from a composite material, preferably a carbon fibre-based composite whilst the curved connecting members are formed from a more conventional material such as steel or aluminium.

The non-complex structure is simple to manufacture and repair. The plates are preferably rectangular and may have cut-outs formed therein to further reduce weight and material cost. With little in the way of processing required for the plates, the high costs associated with complex structures made from carbon fibre material are thus avoided.

The provision of separate plates and connecting members also facilitates easier and cheaper repair in the event of damage to a part of the boom compared to moulded booms.

The connecting members may be formed from a cheaper material that is easier to bend, roll and/or machine such as steel or aluminium. Each connecting member provides a joint along a respective elongate edge of the tubular structure between an adjacent two of the three plates. At least one, preferably all, of the three connecting members is preferably fastened between a respective two of the three plates by one of bolts and rivets so as to offer simple disassembly in the event of a repair. In an alternative embodiment the plates and connecting members may be fastened using adhesive which advantageously reduces part count and further simplifies assembly. In another alternative the plates and connecting members are welded together.

In a preferred embodiment a first one of the three plates is a base plate which resides at the bottom of the triangular section when the boom is attached to an agricultural crop sprayer, wherein dispensing nozzles are mounted to the boom and configured to dispense liquid in a generally downward direction. The other two plates preferably present longer sides in terms of the triangular section thus presenting an isosceles triangle, albeit with rounded corners.

An end element is preferably provided and disposed inside the tubular structure at one end thereof, wherein the end element is mated to the three plates by one of bolts and rivets. The end element provides a structure to which other sections of a multi-section boom can be mounted. The end element is preferably secured to the triangular box arrangement by bolts or rivets that extend through the plates. Alternatively, the end element may be glued or welded in place.

### BRIEF DESCRIPTION OF DRAWINGS

Further advantages of the invention will become apparent from reading the following description of specific embodiments with reference to the appended drawings in which:-
Fig. 1 is a schematic side view of a tractor and trailed sprayer fitted with a multi-section boom constructed in accordance with the present invention;
Fig. 2 is a schematic plan view of the tractor and sprayer of Fig. 1 showing the boom in an unfolded configuration in solid lines and in a folded configuration in dashed lines;
Fig. 3 is a schematic rear view of the boom of Fig. 2 in the unfolded configuration;
Fig. 4 is a perspective view of one boom section in accordance with an embodiment of the invention;
Fig. 5 is an end view of the tubular structure forming part of the boom section of Fig. 4 shown with one connecting member in exploded form;
Fig. 6 is a perspective view of an end member of the boom section of Fig. 4; and,
Fig. 7 is a perspective view of an end portion of the boom section of Fig. 4 showing the end member in exploded form.

### DETAILED DESCRIPTION OF SPECIFIC EMBODIMENTS

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

Reference to terms such as longitudinal, transverse and vertical are made with respect to a longitudinal vehicle axis which is parallel to a normal forward direction of travel.

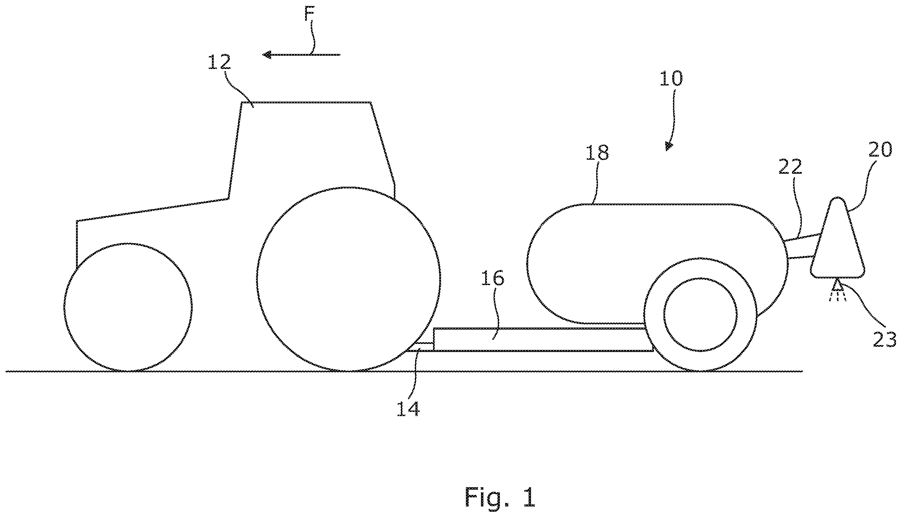

With reference to Figs. 1, 2 and 3 a trailed agricultural sprayer 10 is represented in schematic form from various views. The sprayer 10 is attached to the rear of a tractor 12 by means of towing hitch 14 associated with the tractor and a drawbar tongue 16 forming part of the chassis of the sprayer 10. The sprayer 10 includes a storage tank 18 which serves to store the liquid material to be applied to a crop field.

A transversely-extending multi-section boom 20 is formed from five separate boom sections 20a to 20e which are connected by hinge means and aligned with one another in the operating configuration shown. In this configuration the boom 20 extends substantially at right angles to the forward direction of travel, represented by arrow F in Fig. 1.

A central boom section 20c is fixed to the rear of the sprayer 10 by a suitable linkage represented at 22. As in known sprayer machines, the linkage 22 may permit raising and lowering of the boom to adapt to different crops and conditions.

The boom 20 further comprises a left-hand boom assembly and a right-hand boom assembly each hingeably mounted to respective ends of the central boom section 20c for pivoting movement around a substantially vertical axis. Left-hand boom assembly comprises an inner boom section 20b mounted to the central boom section 20c and an outer boom section 20a hingeably connected to the inner boom section 20b. Right-hand boom assembly comprises an inner boom section 20d mounted to the central boom section 20c and an outer boom section 20e hingeably connected to the inner boom section 20d.

It should be appreciated that a multi-section boom may have more or less boom sections than the five boom sections shown in Fig. 1. For example, in a common alternative, each side boom assembly may include an inner boom section hinged to the centre boom section, a mid boom section hinged to an outboard end of the inner boom section, and a boom tip section pivotably mounted to an outboard end of the mid boom section by a breakaway joint.

Turning back to the illustrated embodiment, liquid dispense devices 23 in the form of nozzles for example are mounted to the boom in a spaced relationship across the working width. During a spraying operation Liquid stored in the tank 18 is conveyed to the dispense devices 23 by a liquid delivery network (not shown) and applied to the field by the dispense devices 23 in a generally downward direction. Liquid delivery networks are known in the art and will not be described in any detail here. It should be understood that although only nine dispense devices 23 are shown in the drawings, the number used will depend on the boom length and desired spacing.

The pivoting connections between the respective boom sections 20a-e allow the multi-section boom 20 to be folded into a transport configuration represented schematically by dashed 20'. It should be recognised that the folding mechanism and construction of the boom 20 is shown in highly schematic form in Figs. 1-3.

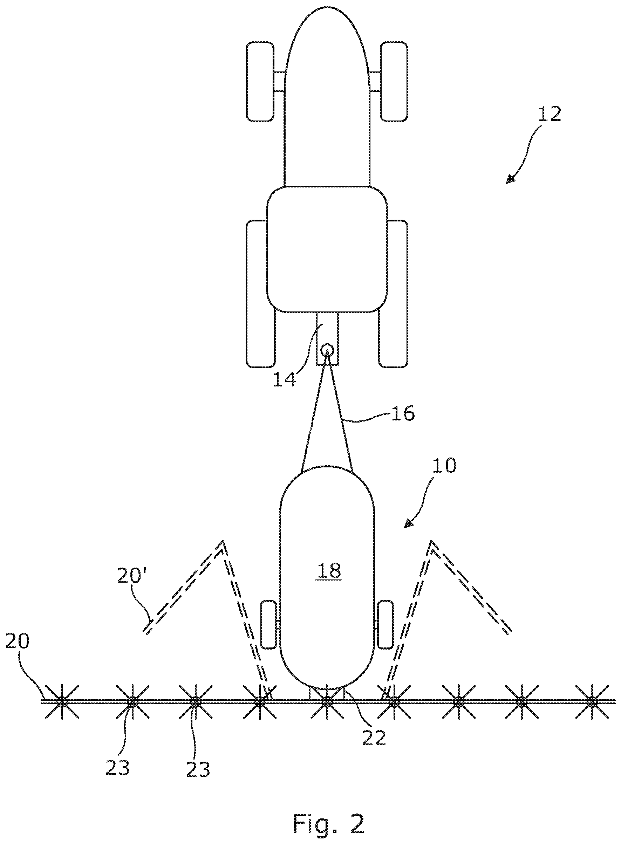

The embodiment of the invention to be described below relates to the construction of a boom (or boom section) for mounting to an agricultural sprayer such as that shown in Figures 1 and 2. It should be understood that the boom construction described hereinafter can be used in conjunction with different types of agricultural sprayer including mounted, trailed and self-propelled.

The following description makes reference to "booms" but it should be understood that the constructions described can be applied to a single boom section of a multi-section boom, and the term "boom" shall encompass "boom section" also.

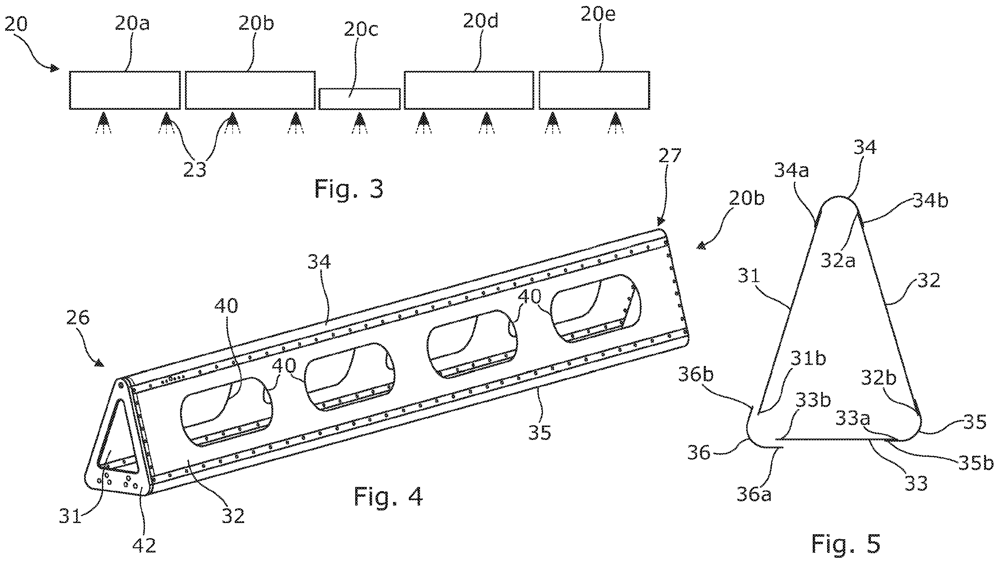

With reference to Fig. 4 boom section 20b is shown in more detail, and will hereinafter be referred to as boom 20b. Although the following description makes reference specifically to the inner left boom section 20b it should be appreciated that the same construction may be, and is preferably, followed by the other boom sections 20a, d and e (the centre boom section 20c is typically of a different construction and integrated with a boom support frame). Moreover, it should be understood that the construction described below with reference to Figs. 4-7 can be applied to a standalone boom and the incorporation of the described construction into a multi-section boom 20 as illustrated is not to be considered as essential.

The boom 20b has a tubular structure with a rounded triangular section that extends from a first boom end 26 to a second boom end 27. The rounded triangular section can be seen best in Fig. 5. The tubular structure comprises three substantially flat plates 31,32,33 fastened together by three curved connecting members 34,35,36. The plates 31,32,33 form the three sides of the triangular-shaped section. The connecting members 34,35,36 form the rounded vertices of the triangular-shaped section. Both the flat plates 31,32,33 and the connecting members 34,35,36 are elongate having a major axis that extends the length of the boom 20b from the first boom end 26 to the second boom end 27. Typically, a boom section has a length of 7-8 metres for an inner section or 3-4 metres for a tip section.

The plates 31,32,33 are fastened together by the connecting members 34,35,36 by structural adhesive such as urethane or epoxy adhesive, although bolts, rivets or welding are alternative means for fastening. In more detail, an upper connecting member 34 extends lengthwise along the apex of the triangular structure and has a continuous curved or arcuate section along the length thereof. A front plate 31 and a rear plate 32 are fastened along respective lengthwise edges 31a,32a that overlap with front and rear lengthwise edges 34a,34b of the upper connecting member 34. For the receipt of bolts or rivets holes 38 may be provided along the edges 31a,32a,34a,34b. A rear connecting member 35 and front connecting member 36 are fastened to adjacent pairs of the flat plates in the same manner. The rear connecting member 35 extends lengthwise along the rearmost vertex of the triangular structure and has a continuous curved or arcuate section along the length thereof. The rear plate 32 and a base plate 33 are fastened along respective lengthwise edges 32b,33a that overlap with upper and lower lengthwise edges 35a,35b of the rear connecting member 35. The front connecting member 36 extends lengthwise along the front-most vertex of the triangular structure and has a continuous curved or arcuate section along the length thereof. The base plate 33 and the front plate 31 are fastened along respective lengthwise edges 33b,31b that overlap with lower and upper lengthwise edges 36a,36b of the front connecting member 36.

Fastened together the plates 31,32,33 and connecting members 34,35,36 provide a hollow, tubular structure which is load bearing when in operation. In other words, when in a multi-section boom assembly, the tubular structure carries the weight of any outboard boom sections mounted thereto (for example like outer boom section 20a in Fig. 3). In an alternative arrangement not illustrated the curved connecting members 34,35,36 may overlap on the inside of the plates 31,32,33.

The flat plates 31,32,33 are formed from a first material. The connecting members 34,35,36 are formed from a second material that is different to the first material. In a preferred embodiment the first material is a carbon fibre composite which exhibits strong and stiff characteristics whilst being lighter than steel or aluminium for example. Alternatively, by way of further example, the first material may be an aramid composite, a glass fibre composite or a hybrid material.

The second material is preferably steel or aluminium which is cheaper than composite materials.

Use of a stronger yet lighter material for the flat plates 31,32,33 in combination with a cheaper material for the connecting members 34,35,36 delivers the benefits of composite materials without adding significant cost.

Cut-outs 40 are provided in the front and rear flat plates 31,32 to improve accessibility to any plumbing residing within the tubular structure for easier maintenance.

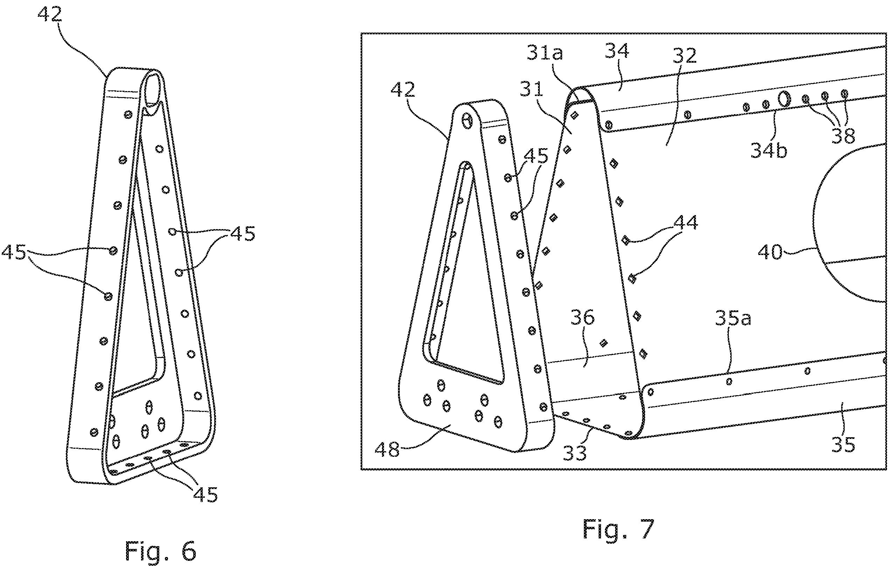

With reference to Figs. 6 and 7, an end element 42 is nested inside the tubular structure at the first boom end 26. The end element 42 is mated to the three plates 31,32,33 and secured in place preferably by bolts which pass through holes 44 formed in the plates 31,32,33 into threaded bores 45 in the end element 42. The end element 42 has an external profile that matches the internal profile of the rounded triangular section of the tubular structure described above.

The end element 42 is preferably a cast component or machined. The end element 42 serves as a mounting plate to which the boom section 20b can be mounted to a centre boom frame or to an adjacent boom section. As such, holes 46 may be preformed or drilled in an end face 48 of the end element 42 to facilitate the securing of brackets and the like for hinging to adjacent boom sections or for the attachment of actuators.

While the present invention has been described herein with respect to certain embodiments, those of ordinary skill in the art will recognize and appreciate that it is not so limited but encompasses many additions, deletions, and modifications to the illustrated embodiments which may be made without departing from the scope of the invention as defined in the appended claims, including legal equivalents thereof.

## Claims

1. A boom (20) for an agricultural crop sprayer (10) having a tubular structure with a rounded triangular section that extends from a first boom end (26) to a second boom end (27), **characterised in** the tubular structure comprising three flat plates (31, 32, 33) fastened together by three curved connecting members (34, 35, 36), wherein the flat plates are formed from a first material and the curved members are formed from a second material different to the first material.

2. A boom (20) according to Claim 1, wherein the first material is carbon fibre.

3. A boom (20) according to Claim 1 or 2, wherein the second material is one of steel and aluminium.

4. A boom (20) according to any preceding claim, wherein at least one of the three plates (31, 32, 33) comprises cut-outs (40) formed therein.

5. A boom (20) according to any preceding claim, wherein at least one of the three connecting members (34, 35, 36) is fastened between a respective two of the three plates (31, 32, 33) by one of bolts and rivets.

6. A boom (20) according to any preceding claim, wherein at least one of the three connecting members (31, 32, 34) is fastened between a respective two of the three plates by adhesive.

7. A boom (20) according to any preceding claim, wherein a first one of the three plates (33) is a base plate, and wherein dispensing nozzles (23) are mounted to the boom and configured to dispense liquid in a generally downward direction.

8. A boom (20) according to any preceding claim, further comprising an end element (42) that is disposed inside the tubular structure at the first boom end (26), wherein the end element is mated to the three plates by one of bolts, rivets and adhesive.

9. A boom (20) according to Claim 8, wherein the end element (42) has an external profile that matches a profile of the triangular section.

10. A multi-section boom arrangement (20) comprising a first boom section (20b) according to Claim 8 or 9, and a second boom section (20a) that is hingeably attached to the end element.

11. An agricultural crop sprayer (10) comprising a chassis, a fluid storage tank, and a boom (20) according to claims 1 to 9 or a multi-section boom arrangement according to claim 10.

12. A method of manufacturing a crop sprayer boom (20) having a tubular structure with a rounded triangular section that extends from a first boom end (26) to a second boom end (27), **characterised in** the method comprising fastening three flat plates (31, 32, 33) together with three curved connecting members (34, 35, 36) to form the tubular structure, wherein the flat plates are formed from a first material and the curved members are formed from a second material different to the first material.

13. A method according to Claim 12, comprising bolting or riveting each of the three connecting members (34, 35, 36) to a respective adjacent pair of the three plates (31, 32, 33).

14. A method according to Claim 12, comprising gluing each of the three connecting members (34, 35, 36) to respective adjacent pairs of the three plates (31, 32, 33).

## Patentansprüche

1. Balken (20) für eine landwirtschaftliche Erntegut-Sprüheinrichtung (10) mit einer rohrförmigen Struktur mit einem abgerundeten dreieckigen Querschnitt, der sich von einem ersten Balkenende (26) zu einem zweiten Balkenende (27) erstreckt, **dadurch gekennzeichnet, dass** die rohrförmige Struktur drei ebene Platten (31, 32, 33) aufweist, die durch drei gekrümmte Verbindungselemente (34, 35, 36) aneinander befestigt sind, wobei die ebenen Platten aus einem ersten Material gebildet sind und die gekrümmten Verbindungselemente aus einem zweiten Material gebildet sind, welches von dem ersten Material abweicht.

2. Balken (20) nach Anspruch 1, wobei das erste Material Karbonfasern sind.

3. Balken (20) nach Anspruch 1 oder 2, wobei das zweite Material Stahl oder Aluminium ist.

4. Balken (20) nach einem der vorhergehenden Ansprüche, wobei mindestens eine der drei Platten (31, 32, 33) darin gebildete Ausschnitte (40) aufweist.

5. Balken (20) nach einem der vorhergehenden Ansprüche, wobei mindestens eines der drei Verbindungselemente (34, 35, 36) zwischen jeweils zwei der drei Platten (31, 32, 33) durch Bolzen oder Niete befestigt ist.

6. Balken (20) nach einem der vorhergehenden Ansprüche, wobei mindestens eine der drei Verbindungselemente (31, 32, 34) zwischen jeweils zwei der der Platten mittels eines adhäsiven Mittels befestigt ist.

7. Balken (20) nach einem der vorhergehenden Ansprüche, wobei eine erste Platte der drei Platten (33) eine Basisplatte ist und Ausbringdüsen (23) an dem Balken montiert sind und für eine Abgabe von Flüssigkeit in eine im Wesentlichen nach unten orientierte Richtung ausgebildet sind.

8. Balken (20) nach einem der vorhergehenden Ansprüche, des Weiteren mit einem Endelement (42), welches an dem ersten Balkenende (26) innerhalb der rohrförmigen Struktur angeordnet ist, wobei das Endelement mit den drei Platten durch Bolzen, Nieten oder ein adhäsives Mittel verbunden ist.

9. Balken (20) nach Anspruch 8, wobei das Endelement (42) ein äußeres Profil aufweist, welches mit einem Profil des dreieckigen Querschnitts übereinstimmt.

10. Mehrabschnitts-Balkenanordnung (20) mit einem ersten Balkenabschnitt (20b) nach Anspruch 8 oder 9 und einem zweiten Balkenabschnitt (20a), der verschwenkbar mit dem Endelement verbunden ist.

11. Landwirtschaftliche Erntegut-Sprüheinrichtung (10) mit einem Chassis, einem Fluid-Speichertank und einem Balken (20) nach einem der Ansprüche 1 bis 9 oder mit einer Mehrabschnitts-Balkenanordnung nach Anspruch 10.

12. Verfahren zur Herstellung eines Balkens (20) für eine Erntegut-Sprüheinrichtung mit einer rohrförmigen Struktur mit einem abgerundeten dreieckigen Querschnitt, der sich von einem ersten Balkenende (26) zu einem zweiten Balkenende (27) erstreckt, **dadurch gekennzeichnet, dass** das Verfahren das Befestigen von drei ebenen Platten (31, 32, 33) aneinander mittels drei gekrümmten Verbindungselementen (34, 35, 36) zur Bildung der rohrförmigen Struktur umfasst, wobei die ebenen Platten aus einem ersten Material gebildet sind und die gekrümmten Verbindungselemente aus einem zweiten Material gebildet sind, welches von dem ersten Material abweicht.

13. Verfahren nach Anspruch 12, mit einem Verbinden jedes der drei Verbindungselemente (34, 35, 36) mit einem jeweiligen benachbarten Paar der drei Platten (31, 32, 33) durch Verbolzen oder Vernieten.

14. Verfahren nach Anspruch 12, mit einem Verkleben jedes der drei Verbindungselemente (34, 35, 36) mit einem zugeordneten benachbarten Paar der drei Platten (31, 32, 33).

## Revendications

1. Rampe (20) pour un pulvérisateur agricole (10) présentant une structure tubulaire à section triangulaire arrondie qui s'étend d'une première extrémité (26) de rampe à une seconde extrémité (27) de rampe, **caractérisée par le fait que** la structure tubulaire comprend trois plaques plates (31, 32, 33) fixées ensemble par trois organes de liaison (34, 35, 36) incurvés, dans laquelle les plaques plates sont formées d'un premier matériau et les organes incurvés sont formés d'un second matériau différent du premier matériau.

2. Rampe (20) selon la revendication 1, dans laquelle le premier matériau est une fibre de carbone.

3. Rampe (20) selon la revendication 1 ou 2, dans laquelle le second matériau est soit de l'acier soit de l'aluminium.

4. Rampe (20) selon une quelconque revendication précédente, dans laquelle au moins l'une des trois plaques (31, 32, 33) comprend des découpes (40) formées en son sein.

5. Rampe (20) selon une quelconque revendication précédente, dans laquelle au moins un des trois organes de liaison (34, 35, 36) est fixé entre deux plaques respectives des trois plaques (31, 32, 33) par soit des boulons soit des rivets.

6. Rampe (20) selon une quelconque revendication précédente, dans laquelle au moins l'un des trois organes de liaison (31, 32, 34) est fixé entre deux plaques respectives des trois plaques par un adhésif.

7. Rampe (20) selon une quelconque revendication précédente, dans laquelle une première des trois plaques (33) est une plaque de base, et dans laquelle des buses de distribution (23) sont montées sur la rampe et configurées pour distribuer un liquide dans une direction généralement descendante.

8. Rampe (20) selon une quelconque revendication précédente, comprenant en outre un élément d'extrémité (42) qui est disposé à l'intérieur de la structure tubulaire au niveau de la première extrémité (26) de rampe, dans laquelle l'élément d'extrémité est accouplé aux trois plaques soit par des boulons, soit par des rivets, soit par un adhésif.

9. Rampe (20) selon la revendication 8, dans laquelle l'élément d'extrémité (42) présente un profil externe qui correspond à un profil de la section triangulaire.

10. Agencement de rampe (20) à plusieurs sections comprenant une première section (20b) de rampe selon la revendication 8 ou 9, et une seconde section (20a) de rampe qui est fixée de manière articulée à l'élément d'extrémité.

11. Pulvérisateur agricole (10) comprenant un châssis, un réservoir de stockage de fluide et une rampe (20) selon les revendications 1 à 9 ou un agencement de rampe à plusieurs sections selon la revendication 10.

12. Procédé de fabrication d'une rampe (20) de pulvérisateur présentant une structure tubulaire avec une section triangulaire arrondie qui s'étend d'une première extrémité (26) de rampe à une seconde extrémité (27) de rampe, **caractérisé par le fait que** le procédé comprend la fixation de trois plaques plates (31, 32, 33) ensemble avec trois organes de liaison (34, 35, 36) incurvés pour former la structure tubulaire, dans lequel les plaques plates sont formées à partir d'un premier matériau et les organes incurvés sont formés à partir d'un second matériau différent du premier matériau.

13. Procédé selon la revendication 12, comprenant le boulonnage ou le rivetage de chacun des trois organes de liaison (34, 35, 36) à une paire adjacente respective des trois plaques (31, 32, 33).

14. Procédé selon la revendication 12, comprenant le collage de chacun des trois organes de liaison (34, 35, 36) sur des paires adjacentes respectives des trois plaques (31, 32, 33).
